# EUROPEAN PATENT APPLICATION

(11) **EP 4 345 994 A1**
(43) Date of publication of application: **03.04.2024**
(21) Application number: 23796771.6
(22) Date of filing: 25.04.2023
(51) Int. Cl.: H01M 50/204, H01M 50/211, H01M 50/249, H01M 50/383, H01M 10/658, H01M 10/625

(54) **BATTERY MODULE, BATTERY PACK AND VEHICLE INCLUDING SAME**

(30) Priority: 27.04.2022 KR 20220052364; 19.04.2023 KR 20230051624
(71) Applicant: LG Energy Solution, Ltd., Seoul 07335 (KR)
(72) Inventor: JANG, Sung-Hwan, Daejeon 34122 (KR); JUNG, Hye-Mi, Daejeon 34122 (KR); PARK, Jun-Kyu, Daejeon 34122 (KR); SEONG, Jun-Yeob, Daejeon 34122 (KR)
(74) Representative: Plasseraud IP
(86) International application number: PCT/KR2023/005632
(87) International publication number: WO 2023/211126

(57) **Abstract**

A battery module configured to ensure structural stability in case of a thermal event, and a battery pack and a vehicle comprising the same are provided.

The battery module according to an aspect of the present disclosure includes a cell assembly having at least one battery cell, and a module frame configured to accommodate the battery cell in a cell accommodation portion and to open a part of the cell accommodation portion.

## Description

### TECHNICAL FIELD

The present application claims priority to Korean Patent Application No. 10-2022-0052364 filed on April 27, 2022 in the Republic of Korea and Korean Patent Application No. 10-2023-0051624 filed on April 19, 2023 in the Republic of Korea, the disclosures of which are incorporated herein by reference.

The present disclosure relates to a battery module, and a battery pack and a vehicle comprising the same, and more particularly, to a battery module configured to ensure structural stability in case of a thermal event, and a battery pack and a vehicle comprising the same.

### BACKGROUND ART

Recently, with the rapid increase in demand for portable electronic products such as laptop computers, video cameras and mobile phones and ever-increasing development of electric vehicles, accumulators for energy storage, robots and satellites, many studies are being conducted on high performance secondary batteries that can be repeatedly recharged.

Currently commercialized secondary batteries include nickel cadmium batteries, nickel hydride batteries, nickel zinc batteries, and lithium secondary batteries. Among them, lithium secondary batteries are in the spotlight because they have almost no memory effect compared to nickel-based batteries, and thus have advantages of free charge/discharge, very low self-discharge rate, and high energy density.

The lithium secondary batteries mainly use a lithium-based oxide and a carbon material as a positive electrode active material and a negative electrode active material, respectively. In addition, the lithium secondary batteries include an electrode assembly including a positive electrode plate and a negative electrode plate respectively coated with the positive electrode active material and the negative electrode active material and a separator interposed between the positive electrode plate and the negative electrode plate, and a hermetically sealed packaging or battery case in which the electrode assembly is received together with an electrolyte solution.

Meanwhile, according to the shape of the battery case, lithium secondary batteries may be classified into can-type secondary batteries in which the electrode assembly is included in a metal can and pouch-type secondary batteries in which the electrode assembly is included in a pouch made of an aluminum laminate sheet. The can-type secondary batteries may be sub-classified into cylindrical batteries and prismatic batteries according to the shape of the metal can.

Here, the pouch of the pouch-type secondary batteries may be largely divided into a lower sheet and an upper sheet that covers the lower sheet. In this instance, the pouch accommodates the electrode assembly including the positive electrode, the negative electrode and the separator stacked and wound together. Additionally, after the electrode assembly is received, the edge of the upper sheet and the lower sheet is sealed by heat welding. Additionally, an electrode tab drawn from each electrode may be coupled to an electrode lead, and an insulation film may be added to the electrode lead at an area of contact with the sealing portion.

The pouch-type secondary batteries may be so flexible that they may be constructed in various shapes. Additionally, the pouch-type secondary batteries may realize secondary batteries of the same capacity with smaller volume and mass.

The lithium secondary batteries are used to construct a battery module or a battery pack by stacking a plurality of battery cells themselves or in a cartridge to form a densely packed structure and electrically connecting them to provide high voltage and high current.

In the battery pack configuration, typically, one of the important issues is safety. In particular, when a thermal event occurs in any of the battery cells included in the battery pack, it is necessary to suppress the propagation of the event to the other battery cell. Unless thermal propagation between the battery cells is properly suppressed, the thermal event may spread to the other battery cell included in the battery pack, causing a greater problem such as a fire or explosion in the battery pack. Moreover, the fire or explosion in the battery pack may cause human and economic loss and damage. Accordingly, the battery pack needs a configuration for properly controlling the thermal event.

### DISCLOSURE

### Technical Problem

The present disclosure is designed to solve the above-described problem, and therefore the present disclosure is directed to providing a battery module configured to ensure structural stability in case of a thermal event, and a battery pack and a vehicle comprising the same.

However, the technical problem to be solved by the present disclosure is not limited to the above-mentioned problems, and other problems not mentioned will be clearly understood by those skilled in the art from the description below.

### Technical Solution

A battery module according to one aspect of the present disclosure to accomplish the above object comprises a cell assembly having at least one battery cell; and a module frame configured to accommodate the battery cell in a cell accommodation portion and to open a part of the cell accommodation portion.

In an embodiment, the cell accommodation portion may be configured to open a part located at an upper or lower side of the accommodated battery cell.

In an embodiment, the battery cell may be provided in plurality, the cell accommodation portion may be provided in plurality, the battery cells may be accommodated in the plurality of cell accommodation portions, respectively, and the plurality of cell accommodation portions may be configured such that, when viewed in a stacking direction of the battery cells, a part located at the upper side of the accommodated battery cell and a part located at the lower side of the accommodated battery cell are alternately opened.

In an embodiment, the plurality of cell accommodation portions may be configured to be separated from each other by a barrier when viewed in the stacking direction of the battery cells.

In an embodiment, when viewed in the stacking direction of the battery cells, the barrier may be formed in a multi-folded structure.

In an embodiment, the battery cell may include a cell case having an accommodation space for accommodating an electrode assembly therein and protruding an electrode lead electrically connected to the electrode assembly to the outside, and the cell case may be configured to come into close contact with the inside of the cell accommodation portion in the stacking direction of the battery cells.

In an embodiment, the cell accommodation portion may be formed longer than the cell case in a longitudinal direction of the battery cell.

In an embodiment, the cell accommodation portion may be configured to open parts located at both longitudinal sides of the accommodated battery cell.

In an embodiment, the battery module may further comprise a cell fixing member configured to enclose the cell assembly and the module frame.

In an embodiment, the battery module may further comprise a thermal blocking member disposed on at least one of both sides of the cell case within the cell accommodation portion, when viewed in a stacking direction of the battery cells.

In an embodiment, the battery module may further comprise a guide portion provided on at least one of both longitudinal sides of the cell accommodation portion and formed by bending in a stacking direction of the battery cells.

In an embodiment, the battery module may further comprise a bus bar frame for supporting a bus bar electrically connected to an electrode lead of the battery cell accommodated in the cell accommodation portion of the module frame, and the bus bar frame may include a fixing groove into which an end of the module frame is inserted by a predetermined length and fixed.

In an embodiment, the bus bar frame may include a first bus bar frame having a first fixing groove into which one end of the module frame is inserted and fixed; and a second bus bar frame having a second fixing groove into which the other end of the module frame is inserted and fixed.

A battery pack according to another aspect of the present disclosure comprises one or more battery modules described above.

In addition, a vehicle according to sill another aspect of the present disclosure comprises one or more battery packs.

### Advantageous Effects

According to an embodiment of the present disclosure, by inducing a venting gas and/or flame to be discharged to a certain area of the cell accommodation portion, it is possible to suppress ignition factors in the battery module and thereby enhance structural stability of the battery module.

In addition, according to an embodiment of the present disclosure, simultaneous ignition of adjacent battery cells can be prevented.

In addition, various additional effects may be achieved by various embodiments of the present disclosure. Various effects of the present disclosure will be described in detail in each embodiment, or descriptions of effects that can be easily understood by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a battery module according to an embodiment of the present disclosure.
FIG. 2 is an exploded perspective view of the battery module of FIG. 1.
FIG. 3 is a diagram showing a cell assembly included in the battery module of FIG. 1.
FIG. 4 is a diagram showing a module frame included in the battery module of FIG. 1.
FIG. 5 is an enlarged view of a portion A of FIG. 1.
FIG. 6 is a view showing a cell fixing member included in the battery module of FIG. 1.
FIGS. 7 to 12 are diagrams illustrating an assembly process of the battery module of FIG. 1.
FIG. 13 is a diagram showing a battery module according to another embodiment of the present disclosure.
FIG. 14 is a diagram showing a battery module according to still another embodiment of the present disclosure.
FIG. 15 is a diagram showing a battery module according to still another embodiment of the present disclosure.
FIG. 16 is a diagram showing a state in which the module frame of the battery module shown in FIG. 15 is fixed by a bus bar frame.
FIG. 17 is a diagram showing a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

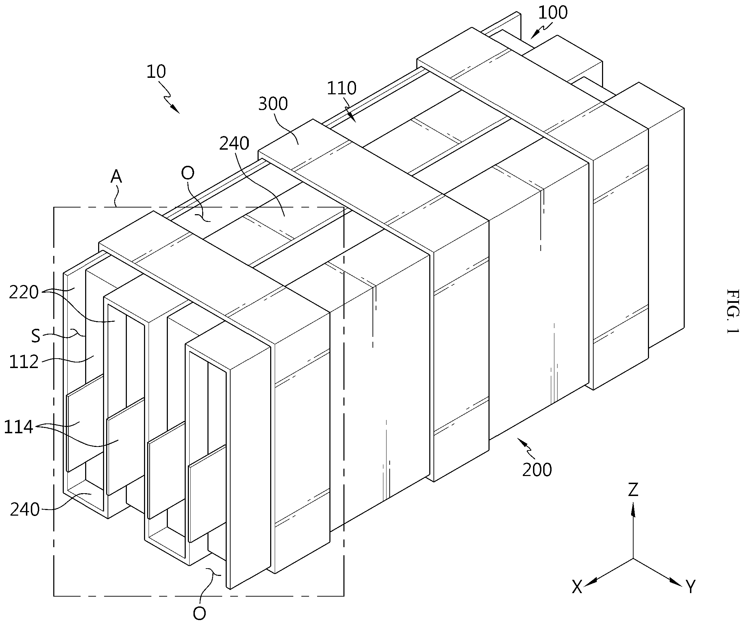

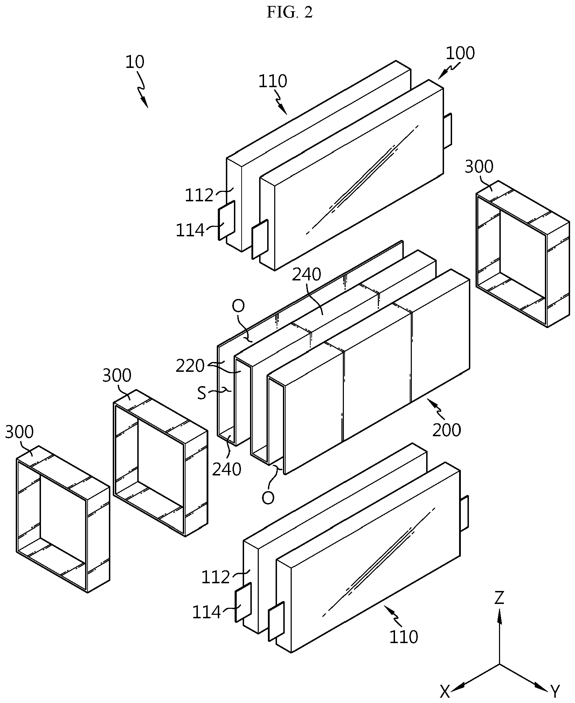

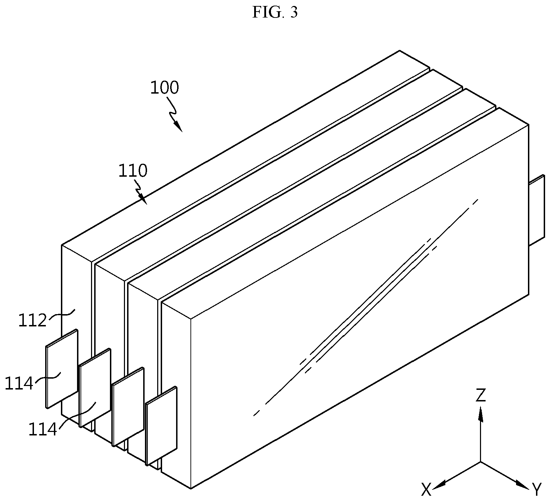

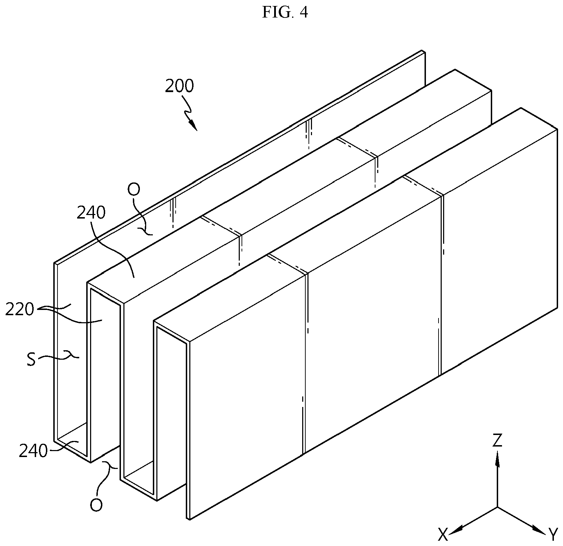

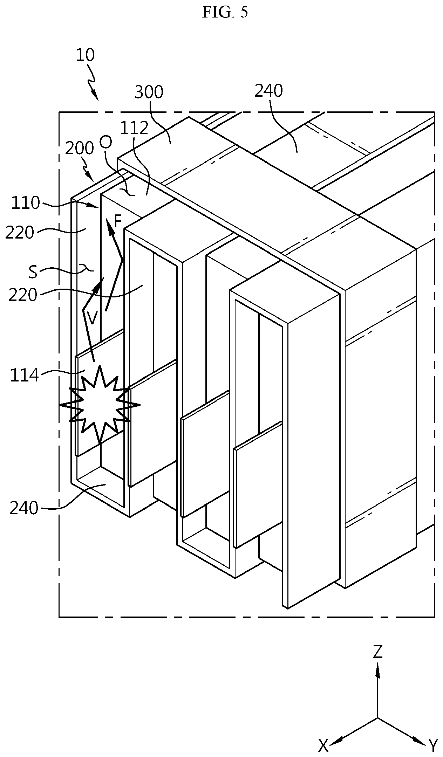

FIG. 1 is a diagram showing a battery module 10 according to an embodiment of the present disclosure, FIG. 2 is an exploded perspective view of the battery module 10 of FIG. 1, FIG. 3 is a diagram showing a cell assembly 100 included in the battery module 10 of FIG. 1, FIG. 4 is a diagram showing a module frame 200 included in the battery module 10 of FIG. 1, and FIG. 5 is an enlarged view of a portion A of FIG. 1.

In detail, FIG. 5 is a diagram showing a state in which the module frame 200 guides the discharge of a venting gas and/or flame due to thermal runaway of the cell assembly 100 within the battery module 10 of the present disclosure. At this time, in FIG. 5, the venting gas is denoted as 'V', and the flame is denoted as 'F'.

In the embodiment of the present disclosure, the X-axis direction shown in the figure may mean a longitudinal direction of the battery cell 110 described later, the Y-axis direction may mean a stacking direction in which the battery cells 110 standing vertically are stacked on the XY plane, and the Z-axis direction may mean a vertical direction perpendicular to both the X-axis direction and the Y-axis direction.

Referring to FIGS. 1 to 5, the battery module 10 according to an embodiment of the present disclosure may include a cell assembly 100 and a module frame 200.

The cell assembly 100 may include at least one battery cell 110. Here, the battery cell may mean a secondary battery. The battery cell 110 may be provided as a pouch-type battery cell, a cylindrical battery cell, or a prismatic battery cell. As an example, the battery cell 110 may be a pouch-type battery cell.

In one embodiment, the cell assembly 100 may include a plurality of battery cells 110, and the plurality of battery cells 110 may be stacked and arranged side by side in one direction (Y-axis direction).

The module frame 200 may be configured to accommodate the battery cell 110. To this end, the module frame 200 may include a cell accommodation portion S having an empty space and accommodating the battery cell 110 in this empty space. The empty space of the cell accommodation portion S may have a shape corresponding to the shape and size of the battery cell 110 so that the battery cell 110 can be accommodated therein. Also, the battery cell 110 may be accommodated in the cell accommodation portion S provided in this way.

In this case, the cell accommodation portion S may be configured to be partially opened. That is, the cell accommodation portion S may be configured such that an empty space is formed therein, and a part of this empty space is opened. In particular, the open part of the cell accommodation portion S may be formed so that the battery cell 110 is inserted into the cell accommodation portion S. Accordingly, the open part of the cell accommodation portion S may have a size or shape into which the battery cell 110 can be inserted.

In addition, the module frame 200 may include a material with high heat resistance and rigidity.

In a general battery module, an event such as thermal runaway may occur in a specific battery cell among the battery cells constituting the cell assembly. In this case, high-temperature and high-pressure venting gas may be generated inside a specific battery cell, and when this venting gas meets oxygen, a flame may be generated inside or outside the battery cell.

At this time, there is a high risk that such a flame will be transferred to another battery cell adjacent to a specific battery cell, and accordingly, simultaneous ignition of a plurality of battery cells may occur. On the other hand, since the conventional battery module has a structure in which a large number of battery cells are disposed within a sealed module case, there is a problem that it is vulnerable to the aforementioned simultaneous ignition.

In order to solve this problem, the module frame 200 of the present disclosure accommodates the battery cell 110 inside the cell accommodation portion S configured to be partially opened, so that a venting gas and/or flame caused by the battery cell 110 when a thermal runaway phenomenon occurs can be induced to be discharged through the open part of the cell accommodation portion S.

According to this embodiment of the present disclosure, a venting gas and/or flame may be induced to be discharged to a certain area of the cell accommodation portion S (an open part of the cell accommodation portion S). Accordingly, it is possible to reinforce structural stability of the battery module 10 by suppressing an ignition factor in the battery module 10.

In particular, the cell accommodation portion S may be configured such that a part of the cell accommodation portion S located at the upper or lower side of the battery cell 110 accommodated in the cell accommodation portion S is opened. Through the open part of the cell accommodation portion S, the battery cell 110 may be inserted into the cell accommodation portion S. Accordingly, the battery cell 110 can be easily inserted into the module frame 200. In this way, the open part of the cell accommodation portion S through which the battery cell 110 can be inserted into the cell accommodation portion S is referred to as a cell insert portion O in the embodiments of the present disclosure. That is, the cell insert portion O may be formed in a part of the cell accommodation portion S located at the upper or lower side of the battery cell 110 accommodated in the cell accommodation portion S.

In one embodiment, the battery cell 110 may have a length extending along the longitudinal direction (X-axis direction) longer than a length of a portion including an electrode lead 114 described later. Also, the cell insert portion O may be formed at a part of the cell accommodation portion S located at the upper or lower side of the battery cell 110 based on the height direction (Z-axis direction) of the battery cell 110. Accordingly, the cell insert portion O may be formed with a larger area than the part of the cell accommodation portion S corresponding to the portion including the electrode lead 114 of the battery cell 110 described later.

In this way, through the cell insert portion O formed wider than the part of the cell accommodation portion S corresponding to the portion including the electrode lead 114 of the battery cell 110, the venting gas and/or flame can be induced to be more quickly discharged to the outside of the cell accommodation portion S. Accordingly, ignition factors in the battery module 10 can be more reliably suppressed.

Referring again to FIGS. 1, 2, 4, and 5, the battery cell 110 may be provided in plurality, and the cell accommodation portion S may be provided in plurality correspondingly. In this case, the plurality of cell accommodation portions S may be configured independently from each other.

Specifically, the plurality of battery cells 110 may be accommodated in the plurality of cell accommodation portion S, respectively.

Also, when viewed in the stacking direction of the battery cell 110, the plurality of cell accommodation portions S may be configured such that a part of the first cell accommodation portion located at the upper side of the battery cell accommodated in the first cell accommodation portion and a part of the second cell accommodation portion located at the lower side of the battery cell accommodated in the second cell accommodation portion adjacent to the first cell accommodation portion are alternately opened. That is, the cell insert portion O may be alternately formed at a part located at the upper side of the battery cell 110 accommodated in one cell accommodation portion S and a part located at the lower side of the battery cell 110 accommodated in another adjacent cell accommodation portion S. In this case, the cell insert portions of the plurality of cell accommodation portions S may be configured to have the same shape and size as each other.

With this configuration, a venting gas and/or flame may be induced to be discharged in opposite directions (upward or downward direction of the battery module 10) between adjacent battery cells 110. Accordingly, simultaneous ignition of adjacent battery cells 110 can be prevented.

Hereinafter, a detailed structure of the above-described module frame 200 will be described in more detail.

Referring back to FIGS. 1, 2, 4, and 5, the module frame 200 may include a first frame 220 and a second frame 240.

The first frame 220 may constitute a side surface of the cell accommodation portion S in the stacking direction of the battery cell 110.

The second frame 240 is connected to the first frame 220 and may constitute an upper surface or a lower surface of the cell accommodation portion S. The second frame 240 may be configured in a flat shape.

Illustratively, as shown in FIGS. 1 and 2 and FIGS. 4 and 5, two first frames 220 and one second frame 240 may constitute the cell accommodation portion S. In this case, the second frame 240 may connect upper ends of the two first frames 220 or lower ends of the two first frames 220.

More specifically, when the second frame 240 connects the upper ends of the two first frames 220, the cell insert portion O may be formed at a lower portion of the battery cell 110 accommodated in the cell accommodation portion S. Also, when the second frame 240 connects the lower ends of the two first frames 220, the cell insert portion O may be formed at a portion located above the battery cell 110 accommodated in the cell accommodation portion S.

In addition, the first frame 220 and the second frame 240 may be configured as an assembly to configure a barrier. This barrier may mean a side of the cell accommodation portion S in the stacking direction of the battery cell 110 and an upper surface or a lower surface of the cell accommodation portion S. As an example, the first frame 220 and the second frame 240 may be joined to each other by welding or integrally formed by injection molding, but are not limited to these manufacturing methods.

Meanwhile, the first frame 220 and the second frame 240 may be provided in plurality in the stacking direction of the battery cell 110. In this case, the second frames 240 may be connected to the first frames 220 to alternately configure the upper surface or the lower surface of the cell accommodation portion S when viewed in the stacking direction of the battery cell 110.

The aforementioned plurality of cell accommodation portions S may be configured to be separated from each other by the barrier formed by the first frame 220 and the second frame 240 when viewed in the stacking direction of the battery cell 110.

With this configuration, simultaneous ignition of adjacent battery cells 110 in the stacking direction of the battery cells 110 can be prevented.

In particular, when viewed in the stacking direction of the battery cell 110, this barrier may be formed in a multi-folded structure.

Specifically, when viewed in the longitudinal direction of the battery cell 110 or the longitudinal direction (X-axis direction) of the module frame 200, the barrier composed of the assembly of the first frame 220 and the second frame 240 may be configured in a shape in which a structure in the form of a 'Z' shape or'S' shape is repeated.

Also, as shown in FIGS. 1, 2, 4, and 5, the battery cell 110 may be accommodated in the cell accommodation portion S, which is a folded portion of the barrier. Therefore, the size of the module frame 200 can be configured more compactly compared to the non-folded frame structure.

In addition, the module frame 200 having a multi-folded structure can be easily configured without providing a separate structure for preventing flame transfer between adjacent battery cells 110. In addition, simultaneous ignition of adjacent battery cells 110 can be effectively suppressed simply by inserting the battery cell 110 into the cell accommodation portion S through the open part (cell insert portion O) of the cell accommodation portion S formed in the module frame 200.

Referring to FIGS. 1 to 5, the battery cell 110 may include a cell case 112.

The cell case 112 may have an accommodation space for accommodating an electrode assembly (not shown) therein, and may protrude an electrode lead 114 electrically connected to the electrode assembly to the outside. At this time, the electrode assembly may include a first electrode plate having first polarity, a second electrode plate having second polarity, and a separator interposed between the first electrode plate and the second electrode plate.

The cell case 112 may be configured to come into close contact with the inside of the cell accommodation portion S in the stacking direction of the battery cell 110. Specifically, the cell case 112 may come into close contact with the first frame 220 constituting the side surface of the cell accommodation portion S in the stacking direction of the battery cell 110.

In this way, since the cell case 112 comes into close contact with the inside of the cell accommodation portion S in the stacking direction of the battery cell 110, a venting gas and/or flame may be blocked by the first frame 220 constituting the barrier. Accordingly, a venting gas and/or flame may be induced to be more effectively discharged to the open part (cell insert portion O) of the cell accommodation portion S.

In particular, the cell accommodation portion S may be formed longer than the cell case 112 in the longitudinal direction of the battery cell 110. Specifically, the first frame 220 may be formed longer than the cell case 112 in the longitudinal direction of the battery cell 110.

Accordingly, the venting gas and/or flame generated at both longitudinal sides of the battery cell 110 may be discharged toward the cell insert portion O while colliding with the longitudinal ends of the two first frames 220 disposed facing each other in the stacking direction of the battery cell 110. In addition, the venting gas and/or flame generated at both longitudinal sides of one battery cell 110 may be suppressed from transferring to another battery cell 110 adjacent thereto in the stacking direction of the battery cell 110 while colliding with the longitudinal end of the first frame 220.

According to this embodiment of the present disclosure, a venting gas and/or flame can be induced to be discharged to the outside of the cell accommodation portion S more quickly, and also multiple simultaneous ignition can be minimized.

Referring again to FIGS. 1, 2, 4, and 5, the cell accommodation portion S may be configured such that parts located at both longitudinal sides of the battery cell 110 accommodated in the cell accommodation portion S are opened.

In an embodiment of the present disclosure, the cell accommodation portion S may be configured such that only a part (cell insert portion O) located at the upper or lower side of the battery cell 110 accommodated in the cell accommodation portion S is opened. Alternatively, the cell accommodation portion S may be configured such that only parts located at both longitudinal sides of the battery cell 110 accommodated in the cell accommodation portion S are opened. In addition, the cell accommodation portion S may also be configured such that both the part located at the upper or lower side of the battery cell 110 accommodated in the cell accommodation portion S and the parts located at both longitudinal sides are opened.

In this way, when the parts located at both longitudinal sides of the battery cell 110 accommodated in the cell accommodation portion S are also opened in the cell accommodation portion S, the venting gas and/or flame can be induced to be more quickly discharged to the outside of the cell accommodation portion S.

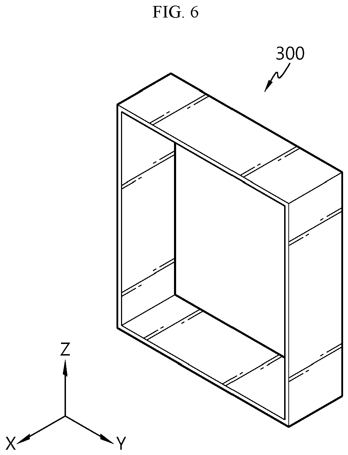

FIG. 6 is a view showing a cell fixing member 300 included in the battery module 10 of FIG. 1.

Referring to FIGS. 1, 2, and 6, the battery module 10 may further include a cell fixing member 300.

The cell fixing member 300 may be configured to enclose the cell assembly 100 and the module frame 200. As an example, the cell fixing member 300 may include a material having strong heat resistance and rigidity. In addition, the cell fixing member 300 may be provided singly or may be provided in plurality in the longitudinal direction of the battery cell 110.

In this way, since the cell assembly 100 can be fixed to the module frame 200 having a multi-folded structure through the cell fixing member 300, the battery module 10 can be stably accommodated in a battery pack composed of an assembly of a plurality of battery modules without a separate case structure.

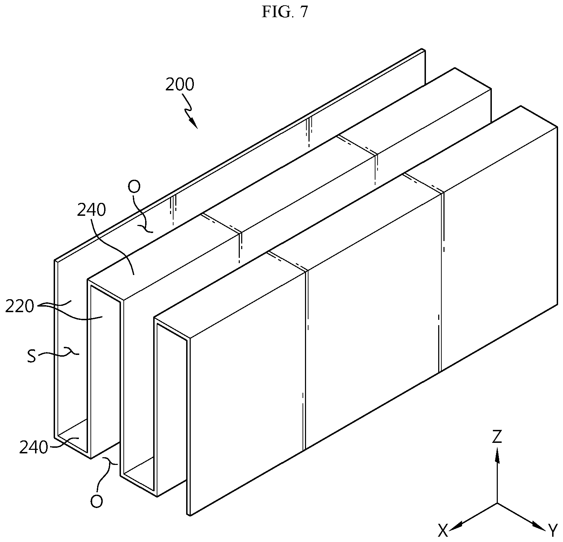

FIGS. 7 to 12 are diagrams illustrating an assembly process of the battery module 10 of FIG. 1.

The assembly process of the above-described battery module 10 of the present disclosure will be described briefly as follows.

First, as shown in FIG. 7, a module frame 200 formed in a multi-folded structure is prepared.

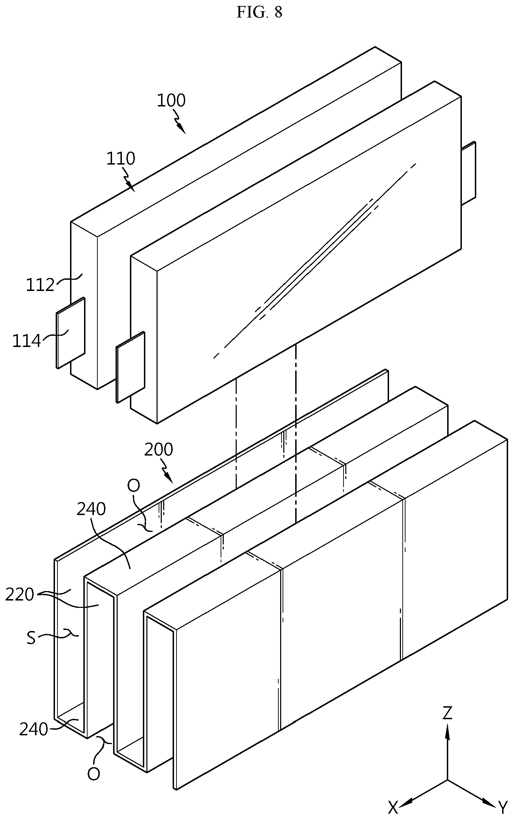

Next, as shown in FIG. 8, the battery cell 110 is first inserted into a part of the plurality of cell accommodation portion S of the module frame 200. At this time, each battery cell 110 may be inserted into the corresponding cell accommodation portion S through the cell insert portion O of the corresponding cell accommodation portion S.

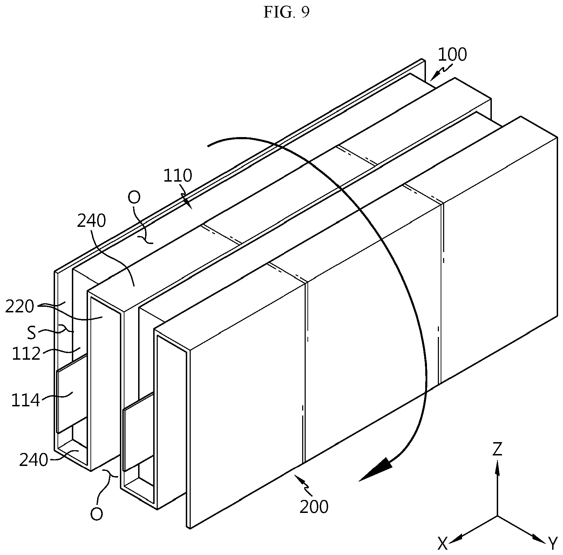

When the battery cells 110 are completely inserted into some of the plurality of cell accommodation portions S, as shown in FIG. 9, the module frame 200 is rotated 180 degrees.

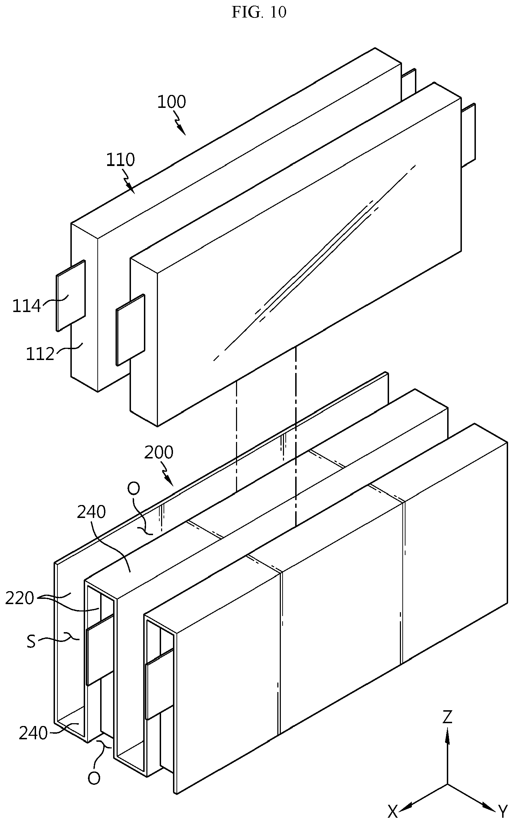

Next, as shown in FIG. 10, the battery cell 110 is secondarily inserted into the remaining cell accommodation portions S in which the battery cell 110 is not inserted, among the plurality of cell accommodation portions S. At this time, each battery cell 110 may be inserted into the corresponding cell accommodation portion S through the cell insert portion O of the corresponding cell accommodation portion S.

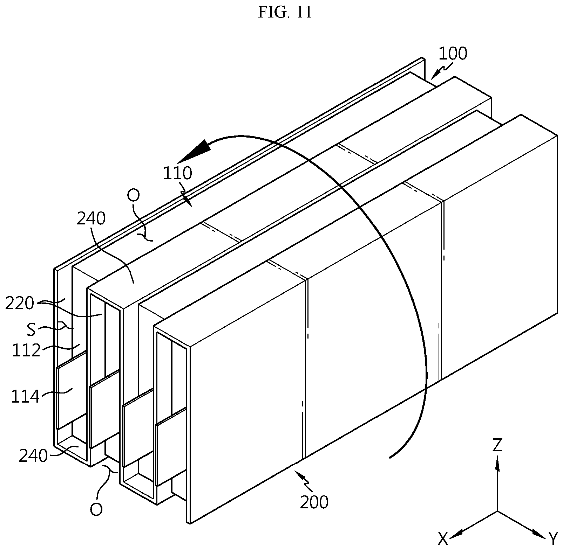

In this way, when the battery cell 110 is completely inserted into the remaining cell accommodation portion S, as shown in FIG. 11, the module frame 200 is rotated 180 degrees again.

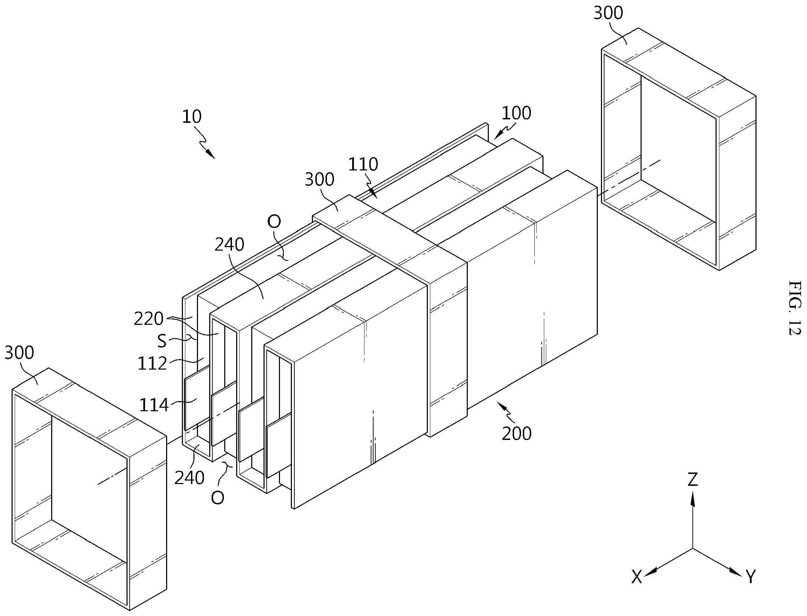

Finally, as shown in FIG. 12, the cell assembly 100 is fixed to the module frame 200 through the cell fixing member 300. Accordingly, as shown in FIG. 1, the battery module 10 may be configured as an assembly.

According to an embodiment of the present disclosure, is possible to configure the battery module 10 just by sequentially inserting battery cells 110 into the module frame 200 through open portions of the module frame 200 having a multi-folded structure, and then fixing the battery cells 110 and the module frame 200 through the cell fixing member 300. Accordingly, the battery module 10 can be assembled simply, and simultaneous ignition of adjacent battery cells 110 can be suppressed with a simpler structure.

In addition, as described above, since the second frame 240 of the module frame 200 is formed in a flat shape, the battery cell 110 can be stably seated within the module frame 200 even while the module frame 200 into which the battery cell 110 is inserted rotates during the assembly process of the battery module 10.

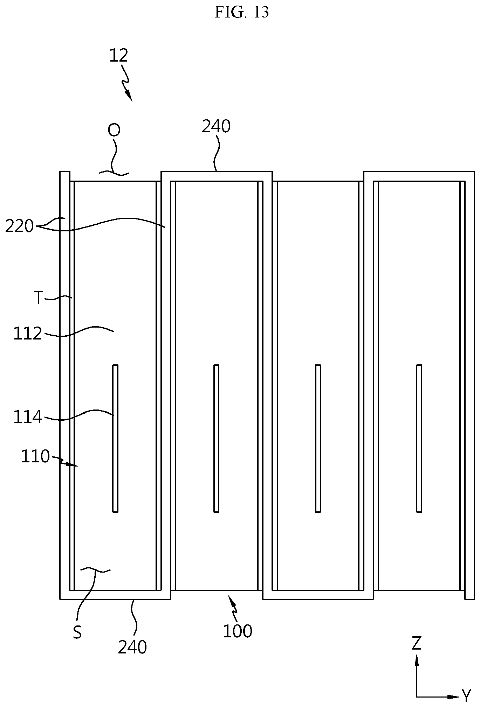

FIG. 13 is a diagram showing a battery module 12 according to another embodiment of the present disclosure.

Since the battery module 12 according to this embodiment is similar to the battery module 10 of the previous embodiment, redundant descriptions of components substantially the same as or similar to those of the previous embodiment will be omitted, and differences from the previous embodiment will be described below.

The battery module 12 shown in FIG. 13 may further include a thermal blocking member T.

The thermal blocking member T may be disposed on at least one of both sides of the cell case 112 within the cell accommodation portion S when viewed in the stacking direction of the battery cell 110. Specifically, the thermal blocking member T may be disposed between the cell case 112 and the first frame 220 in the front and rear directions of the battery cell 110.

The thermal blocking member T may be configured to block flame due to thermal runaway of the battery cell 110. As an example, the thermal blocking member T may be provided in the form of a thermal barrier coating. In particular, a thermal blocking coating agent may be applied or attached to the thermal blocking member T.

In the case of the battery module 12 according to the present embodiment, the spread of the flame to other adjacent battery cells 110 may be primarily delayed through the thermal blocking member T for blocking flame due to thermal runaway of the battery cell 110, and the spread of flame to other adjacent battery cells 110 may be suppressed through the barrier 2. Accordingly, structural stability of the battery module 12 can be maintained more stably.

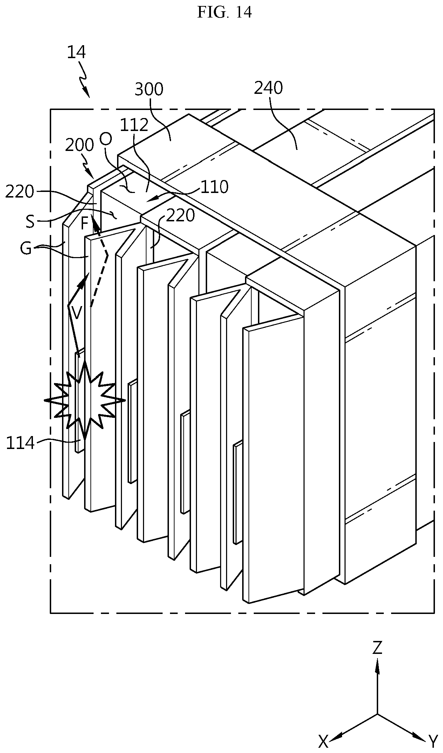

FIG. 14 is a diagram showing a battery module 14 according to still another embodiment of the present disclosure. At this time, in FIG. 14, the venting gas is denoted as 'V', and the flame is denoted as 'F'.

Since the battery module 14 according to this embodiment is similar to the battery module 10 of the previous embodiment, redundant descriptions of components substantially the same as or similar to those of the previous embodiment will be omitted, and differences from the previous embodiment will be described below.

The battery module 14 shown in FIG. 14 may further include a guide portion G.

The guide portion G is provided on at least one of both longitudinal sides of the cell accommodation portion S and may be formed by bending in the stacking direction of the battery cell 110.

Specifically, the guide portion G may be provided at both longitudinal ends of the first frame 220 or only at one longitudinal end of the first frame 220.

This guide portion G can more easily guide the discharge of venting gas and/or flame generated from both longitudinal sides of the battery cell 110 toward the cell insert portion O. That is, as shown in FIG. 14, the venting gas and/or flame generated at both longitudinal sides of the battery cell 110 may be discharged toward the cell insert portion O while colliding with the guide portion G bent in the stacking direction of the battery cell 110. In addition, the venting gas and/or flame generated at both longitudinal sides of one battery cell 110 may be suppressed from transferring to another adjacent battery cell 110 by the guide portion G bent in the stacking direction of the battery cell 110.

In one embodiment, as shown in FIG. 14, the guide portion G may be provided as a pair at longitudinal ends of two first frames 220 disposed to face each other in the stacking direction of the battery cell 110. At this time, the pair of guide portions G may be formed by bending to face each other in the stacking direction of the battery cell 110.

In this case, the venting gas and/or flame can be induced to be more quickly discharged to the outside of the cell accommodation portion S, and also simultaneous ignition of adj acent battery cells 110 in the stacking direction of the battery cells 110 can be minimized.

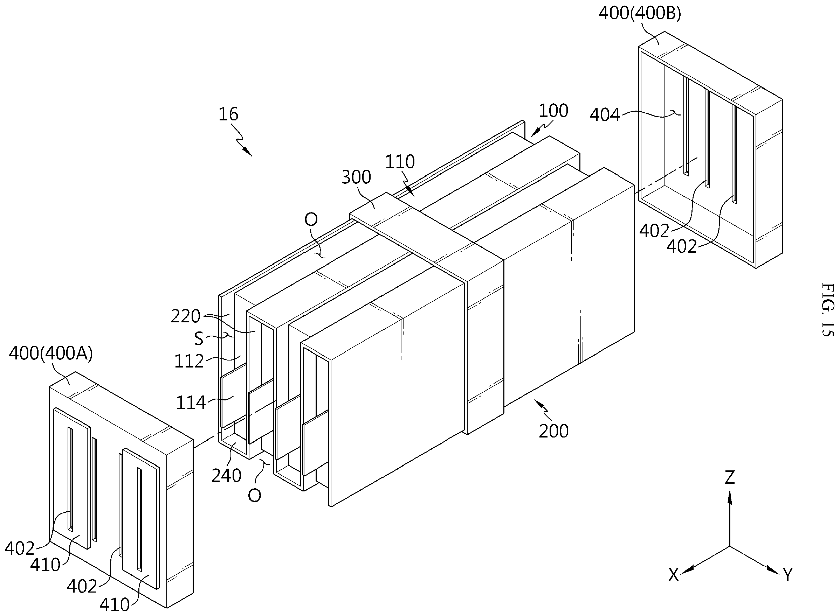

FIG. 15 is a diagram showing a battery module 16 according to still another embodiment of the present disclosure.

Since the battery module 16 according to this embodiment is similar to the battery module 10 of the previous embodiment, redundant descriptions of components substantially the same as or similar to those of the previous embodiment will be omitted, and differences from the previous embodiment will be described below.

As shown in FIG. 15, the battery module 16 may further include a bus bar frame 400 compared to the battery module 10 described above. The bus bar frame 400 may be coupled with a bus bar 410 electrically connected to the electrode lead 114 of the battery cell 110 accommodated in the cell accommodation portion S of the module frame 200 to support the corresponding bus bar 410.

In addition, the bus bar frame 400 may include a slot 402 into which the electrode lead 114 of the battery cell 110 accommodated in the cell accommodation portion S of the module frame 200 is inserted. An end of the electrode lead 114 inserted into the slot 402 and passing through the corresponding slot 402 may be connected to the bus bar 410.

In particular, the bus bar frame 400 may include a fixing groove 404 into which an end in a longitudinal direction (X-axis direction) of the module frame 200 accommodating battery cells is inserted by a predetermined length and fixed. This fixing groove 404 may be configured to match the end of the corresponding module frame 200.

In one embodiment, the bus bar frame 400 may include a first bus bar frame 400A and a second bus bar frame 400B.

The first bus bar frame 400A may be coupled to one end of the module frame 200 based on the longitudinal direction (X-axis direction) of the module frame 200. In addition, the second bus bar frame 400B may be coupled to the other end of the module frame 200 located on the opposite side of the one end based on the longitudinal direction of the module frame 200.

In this case, the first bus bar frame 400A may have a first fixing groove into which one end of the module frame 200 is inserted and fixed. In addition, the second bus bar frame 400B may have a second fixing groove into which the other end of the module frame 200 is inserted and fixed.

As described above, since the fixing groove 404 into which the end of the module frame 200 is inserted and fixed is provided in the bus bar frame 400, deformation of the module frame 200 (e.g., deformation of the cell accommodation portion S) due to the load or external force of the battery cell 110 can be prevented, and the number of cell fixing members 300 surrounding and fixing the module frame 200 can be reduced or the cell fixing members 300 can be omitted.

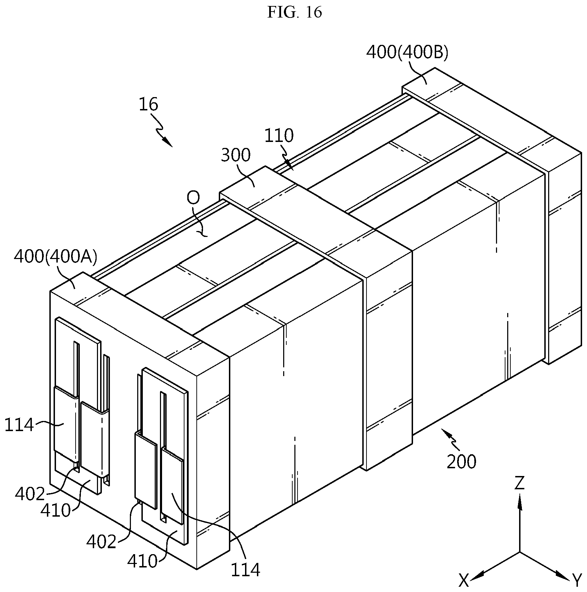

FIG. 16 is a diagram showing a state in which the module frame of the battery module shown in FIG. 15 is fixed by a bus bar frame.

As shown in FIG. 16, both longitudinal ends of the module frame 200 in which the battery cells are accommodated are inserted into and fixed to the first bus bar frame 400A and the second bus bar frame 400B, respectively, so that deformation of the module frame 200 (e.g., deformation of the cell accommodation portion S) due to the load or external force of the battery cell 110 can be prevented.

FIGS. 15 and 16 show that the battery module 16 includes a cell fixing member 300, but when the above-described bus bar frame 400 is applied to the battery module 16, the cell fixing member 300 may be omitted from the corresponding battery module 16.

As described above, according to an embodiment of the present disclosure, by inducing a venting gas and/or flame to be discharged to a certain area of the cell accommodation portion S, ignition factors in the battery module 10, 12, 14, 16 can be suppressed, thereby reinforcing structural stability of the battery module 10, 12, 14, 16.

In addition, according to an embodiment of the present disclosure, simultaneous ignition of adjacent battery cells 110 can be prevented.

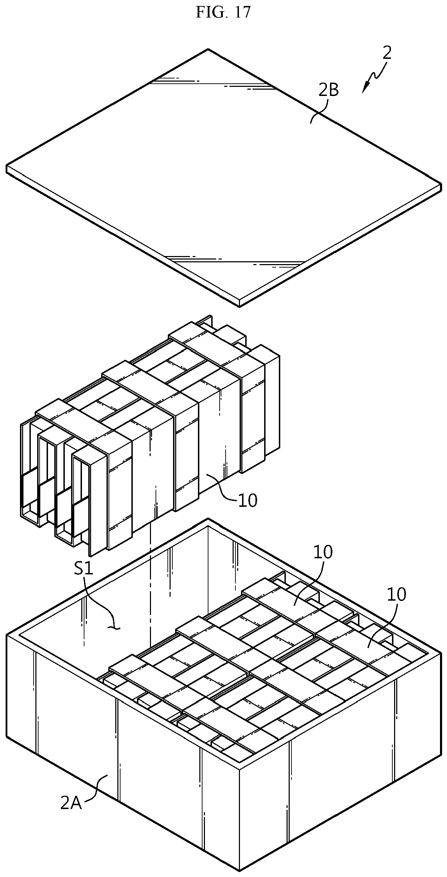

FIG. 17 is a diagram showing a battery pack 2 according to an embodiment of the present disclosure.

As shown in FIG. 17, the battery pack 2 according to an embodiment of the present disclosure may include one or more battery modules 10, 12, 14, 16 according to the present disclosure.

In this case, the battery pack 2 may include various devices for controlling charging and discharging of the battery modules 10, 12, 14, 16, for example, a battery management system (BMS), a current sensor, and a fuse.

In addition, the battery pack 2 may include a pack case 2A, 2B accommodating one or more battery modules 100.

The pack case 2A, 2B may include a pack tray 2A having an accommodation space S1 accommodating a plurality of battery modules, and a pack lid 2B covering an upper opening of the pack tray 2A.

In addition, the battery pack 2 may include various electrical components (not shown) that controls charge/discharge operations of the battery module 10, 12, 14, 16 accommodated in the pack case 2A, 2B or battery cells included in the corresponding battery module 10, 12, 14, 16, or monitor SOC (State Of Charge), SOH (State Of Health), and the like. These electrical components can be accommodated in the pack case 2A, 2B together with the battery module 10, 12, 14, 16.

As such, the battery pack 2 according to the present disclosure is manufactured in a cell-to-pack method, so that the overall weight and volume of the battery pack can be reduced and energy density can be improved.

This battery pack 2 can be applied to a vehicle such as an electric vehicle. That is, a vehicle according to the present disclosure may include one or more battery packs 2 according to the present disclosure.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

On the other hand, in the present disclosure, terms indicating directions such as up, down, left, right, front, and back are used, but these terms are only for convenience of explanation, and it is obvious to those skilled in the art of the present disclosure that the terms may vary depending on the location of the target object or the location of the observer.

## Claims

1. A battery module, comprising:
a cell assembly having at least one battery cell; and
a module frame configured to accommodate the battery cell in a cell accommodation portion and to open a part of the cell accommodation portion.

2. The battery module according to claim 1, wherein the cell accommodation portion is configured to open a part located at an upper or lower side of the accommodated battery cell.

3. The battery module according to claim 2, wherein the battery cell is provided in plurality, and the cell accommodation portion is provided in plurality,
wherein the battery cells are accommodated in the plurality of cell accommodation portions, respectively, and
wherein the plurality of cell accommodation portions are configured such that, when viewed in a stacking direction of the battery cells, a part located at the upper side of the accommodated battery cell and a part located at the lower side of the accommodated battery cell are alternately opened.

4. The battery module according to claim 3, wherein the plurality of cell accommodation portions are configured to be separated from each other by a barrier when viewed in the stacking direction of the battery cells.

5. The battery module according to claim 4, wherein when viewed in the stacking direction of the battery cells, the barrier is formed in a multi-folded structure.

6. The battery module according to claim 1, wherein the battery cell includes a cell case having an accommodation space for accommodating an electrode assembly therein and protruding an electrode lead electrically connected to the electrode assembly to the outside, and
wherein the cell case is configured to come into close contact with the inside of the cell accommodation portion in the stacking direction of the battery cells.

7. The battery module according to claim 6, wherein the cell accommodation portion is formed longer than the cell case in a longitudinal direction of the battery cell.

8. The battery module according to claim 1, wherein the cell accommodation portion is configured to open parts located at both longitudinal sides of the accommodated battery cell.

9. The battery module according to claim 1, further comprising a cell fixing member configured to enclose the cell assembly and the module frame.

10. The battery module according to claim 6, further comprising a thermal blocking member disposed on at least one of both sides of the cell case within the cell accommodation portion, when viewed in a stacking direction of the battery cells.

11. The battery module according to claim 1, further comprising a guide portion provided on at least one of both longitudinal sides of the cell accommodation portion and formed by bending in a stacking direction of the battery cells.

12. The battery module according to claim 1, further comprising a bus bar frame for supporting a bus bar electrically connected to an electrode lead of the battery cell accommodated in the cell accommodation portion of the module frame,
wherein the bus bar frame includes a fixing groove into which an end of the module frame is inserted by a predetermined length and fixed.

13. The battery module according to claim 12, wherein the bus bar frame includes:
a first bus bar frame having a first fixing groove into which one end of the module frame is inserted and fixed; and
a second bus bar frame having a second fixing groove into which the other end of the module frame is inserted and fixed.

14. A battery pack, comprising one or more battery modules according to any one of claims 1 to 13.

15. A vehicle, comprising one or more battery packs according to claim 14.
